(19) Europäisches Patentamt

European Patent Office

Office européen des brevets

(11) **EP 1 475 951 A2**

(12) **EUROPEAN PATENT APPLICATION**

(43) Date of publication:
**10.11.2004 Bulletin 2004/46**

(51) Int Cl.⁷: **H04N 1/32**, H04N 1/00

(21) Application number: **04252663.2**

(22) Date of filing: **07.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **08.05.2003 JP 2003130659**

(71) Applicant: **Ricoh Company Ltd.**
**Tokyo 143-8555 (JP)**

(72) Inventors:
• **Arai, Hiroshi**
  **Kawaguchi-shi Saitama (JP)**
• **Kawamoto, Hiroyuki**
  **Kawasaki-shi Kanagawa (JP)**
• **Miyamoto, Isao**
  **Yamato-shi Kanagawa (JP)**

• **Ohkawa, Satoshi**
  **Nishitokyo-shi Tokyo (JP)**
• **Sugiyama, Naoki**
  **Kawasaki-shi Kanagawa (JP)**
• **Tone, Takeharu**
  **Katsushika-ku Tokyo (JP)**
• **Nishita, Taira**
  **Setagaya-ku Tokyo (JP)**
• **Ohyama, Maki**
  **Ohta-ku Tokyo (JP)**

(74) Representative: **Leeming, John Gerard**
**J.A. Kemp & Co.,**
**14 South Square,**
**Gray's Inn**
**London WC1R 5JJ (GB)**

(54) **A facsimile apparatus, a program, and a storage medium**

(57)    A facsimile apparatus, a computer-readable program, and a storage medium are disclosed. The facsimile apparatus is equipped with a reader for reading original image data, a communication interface for transmitting the read image data to a predetermined network and receiving image data from the network, and a printer engine for forming an image on a medium based on the received image data. The facsimile apparatus further includes storing means for storing the image data in a first data format; receiving means for receiving a request that the image data be sent to a predetermined transmission destination; data format conversion means for converting the stored image data from the first data format into a second data format; and transmitting means for transmitting the converted image data to the requested transmission destination.

FIG.1

**Description**

The present invention relates to a facsimile apparatus, a program, and a storage medium.

A function of network scanning is widely known, wherein a digital copier and an image reader are connected to a network, an original image is scanned and read by a scanner of the digital copier or the image reader, and the read image data are distributed to terminals such as computers (PCs) connected to the network.

For example, Patent Reference 1 (Japanese Patent Laid-Open Application No. 2000-333026) proposes an extension box based on the architecture of a general-purpose computer system, wherein an original image is scanned by an image input unit of an image formation apparatus, data of the scanned image are held by a hard disk drive unit (scanning box) of the extension box, and the data in the scanning box are shared by computers connected to the network.

A process for using the scanning box function is as follows. First, scanning parameters, such as resolution, gradation, a scale factor, a reading side, image size and a place of storage, are chosen, and an original image is read. Then, the read image data are provided to an image processing unit for processing the image according to the scanning parameters. However, since the printout of the image is not contemplated, it is not necessary to generate a data format for a printout system, and accordingly, the color system conversion from the RGB system to the CMYK system, gradation compensation, and compression processing of the image data are omitted. Then, after the image processing the image data are provided to the extension box. The extension box temporarily holds the received image data into the scanning box, which is assigned to a predetermined disk area of the hard disk drive unit. When all the image data are stored, the image data in the scanning box are available to the client computers in the network.

However, in the technology disclosed by Patent Reference 1, since the image data that are image-processed for printing and the image data that are image-processed for scanning box distribution undergo different image-processing, they are printed differently while using the same digital copier.

Further, if a PC serving as a client selects scanning parameters (such as resolution, gradation, a scale factor, reading side, image size, and destination for holding), image data scanned and read are provided to the image processing unit, are processed according to the scanning parameters, and are held by the hard disk. For this reason, the data format of the image data held by the.hard disk cannot be converted. Due to this, when the image is required to be in another format, the image has to be scanned again. This poses another problem to be solved.

Further, the image data held by the hard disk are often in a format peculiar to the digital copier (exclusive format), and are often compressed by an algorithm peculiar to the digital copier (exclusive algorithm) for efficiently conserving the hard disk storage space. When this is the case, another problem is in that the image data cannot be used by PCs that have general-purpose application software only.

It is a general object of the present invention to provide a copier, a facsimile apparatus and the like capable of transmitting image data to the outside, in which image data read by the copier and image data received by client PCs can have the same image quality after being image-formed by the copier.

Another specific object of the present invention is to provide a copier, a facsimile apparatus and the like in which image data already stored in a storage device can be changed in data format and available to several terminals in a variety of data format.

Features and advantages of the present invention are set forth in the description that follows, and in part will become apparent from the description and the accompanying drawings, or may be learned by practice of the invention according to the teachings provided in the description. Objects as well as other features and advantages of the present invention will be realized and attained by a facsimile apparatus, a copier, a program, and a storage medium particularly pointed out in the specification in such full, clear, concise, and exact terms as to enable a person having ordinary skill in the art to practice the invention.

To achieve these and other advantages and in accordance with the objects of the invention, as embodied and broadly described herein, the present invention provides as follows.

The facsimile apparatus of the present invention is equipped with a reader for reading original image data, a communication interface for transmitting the. read image data to a predetermined network and receiving image data from the network, and a printer engine for forming an image on a medium based on the received image data, and includes storing means for storing the image data in a first data format; receiving means for receiving a request that the image data be sent to a predetermined transmission destination; data format conversion means for converting a data format of the stored image data from the first data format into a second data format; and transmitting means for transmitting the converted image data to the requested transmission destination.

In this manner, the image data of the facsimile apparatus can be utilized by outside PCs. Irrespective of receiving sources of image data, the image data formed by the facsimile apparatus can be changed to a certain image quality. The image data stored in the memory device can be converted so as to be used by variety types of terminals.

An aspect of the present invention provides the facsimile apparatus wherein the receiving means receives a request to send the image data in the second data format.

In this manner, the image data can be transmitted in a.data format requested by an external client PC, and the like.

In the facsimile apparatus the data format conversion means can convert between the first and second data formats.

In this manner, the data format in the facsimile apparatus can be converted so as to be utilized by an external client PC, and others.

In the facsimile apparatus, the first and second data formats can be a general-purpose data format.

In this manner, a general-purpose data format in the facsimile can be converted to another general-purpose data format usable by an external client PC, and others.

In the facsimile apparatus, the first data format may be a data format exclusive to the facsimile apparatus and the second data format may be a general-purpose data format.

In this manner, an exclusive format in the facsimile can be converted to a general-purpose data format usable by an external client PC, and others.

In the facsimile apparatus, the first and second data formats may be data formats exclusive to the facsimile apparatus.

In this manner, an exclusive data format in the facsimile can be converted to another exclusive data format usable by an external client PC, and others.

In the facsimile apparatus, the data format converter can convert color spaces of an image between the first and second data formats.

In this manner, image data in the facsimile can be converted to another color space data format usable by an external client PC, and others.

In the facsimile apparatus, the second data format color space in the data format converter may be a device-independent color space.

In this manner, image data in the facsimile can be converted to a device-independent color space data format usable by an external client PC, and others.

In the data format converter, the first data format may be a predetermined color space image data format and the second data format may be a monochrome binary data format or multi-value image data format.

In this manner, image data in the facsimile can be converted to a monochrome binary data format or a multi-value image data format usable by an external client PC, and others.

In the facsimile apparatus, the data format converter can convert the first data format data to monochrome multi-value image data and further convert them to the monochrome binary image data.

In this manner, a variety of image processes can be performed before conversion to the monochrome binary data, so as to satisfy a request by an external client PC, and others.

In the data format converter, the first data format may be a monochrome binary data format or multi-value image data format and the second data format may be a monochrome binary data format or multi-value image data format.

In this manner, image data in the facsimile can be converted to a monochrome binary data format or a multi-value image data format usable by an external client PC, and others.

In the facsimile apparatus, the data format converter can convert the first data format data to multi-value image data and further convert them to the second data format data.

In this manner, a variety of image processes can be performed before conversion to the monochrome binary data, so as to satisfy a request by an external client PC, and others.

In the data format converter, the first and second data formats may have different resolutions.

In this manner, image data in the facsimile can be converted to a predetermined resolution so as to satisfy a request by an external client PC, and others. '

In the facsimile apparatus, the data format converter can perform a space filtering process on the first data format image data.

In this manner, image data in the facsimile can be filtered and transmitted so as to satisfy a request by an external client PC, and others.

In the facsimile apparatus, the data format converter can perform a gamma conversion process on the first data format image data.

In this manner, image data in the facsimile can be gamma-converted and transmitted so as to satisfy a request by an external client PC, and others.

In the facsimile apparatus, the data format converter can perform an isolated point removal process on the first data format image data.

In this manner, isolated points can be removed from image data in the facsimile so as to satisfy a request by an external client PC, and others.

According to another feature of the present invention, a computer-readable program for controlling a facsimile apparatus equipped with a reader for reading original image data, a communication interface for transmitting the read image data to a predetermined network and receiving image data from the network, and a printer engine for forming an image on a medium based on the received image data, includes a storing function for storing the image data in a first data format; a receiving function for receiving a request that the image data be sent to a predetermined transmission destination; a data format conversion function for converting a data format of the stored image data from the first data format into a second data format; and a transmitting function for transmitting the converted image data to the requested transmission destination.

In the program, the receiving function can receive a request to send the image data in the second data format.

According to another feature of the present invention, a storing medium stores the above mentioned program.

In this manner, the image data of the facsimile apparatus can be utilized by outside PCs. Irrespective of receiving sources of image data, the image data formed by the facsimile apparatus can be changed to a certain image quality. The image data stored in the memory device can be converted so as to be used by various types of terminals. And the image data can be transmitted in a data format requested by an external client PC, and the like.

The invention will now be described by way of non-limiting example with reference to the accompanying drawings in which:

Fig. 1 is a block diagram showing the configuration of a digital copier according to an embodiment of the present invention;

Fig. 2 is a block diagram showing the configuration of a scanner compensation unit included in the digital copier;

Fig. 3 is a block diagram showing the configuration of a printer compensation unit included in the digital copier;

Fig. 4 is a block diagram explaining a process for converting the image data by a data format converter, and transmitting the image data;

Fig. 5 is a block diagram showing a FAX communication process of the present invention;

Fig. 6 is a block diagram showing one configuration example of the data format converter;

Fig. 7 is an explanatory diagram explaining one data format example in the data format converter;

Fig. 8 is an explanatory diagram explaining another data format example in the data format converter;

Fig. 9 is an explanatory diagram explaining another data format example in the data format converter;

Fig. 10 shows block diagrams of a resolution converter;

Fig. 11 is an explanatory diagram for explaining a color space conversion by a color space conversion unit;

Fig. 12 is an explanatory diagram for explaining a process for outputting the image data by a digital facsimile apparatus to PCs;

Fig. 13 is a block diagram showing another configuration example of the data format converter;

Fig. 14 shows graphs and a table for explaining a filtering process according to the present invention;

Fig. 15 shows graphs for explaining a gamma compensation process according to the present invention;

Fig. 16 shows a matrix for explaining an isolated point removing process according to the present invention;

Fig. 17 shows an explanatory diagram for explaining a dither method according to the present invention;

Fig. 18 shows an explanatory diagram for explaining an error diffusion method according to the present invention;

Fig. 19 is a block diagram showing another configuration example of the data format converter;

Fig. 20 is a flowchart of a process that a main controller performs; and

Fig. 21 is a block diagram showing electric connections of the main controller.

In the following, embodiments of the present invention are described with reference to the accompanying drawings.

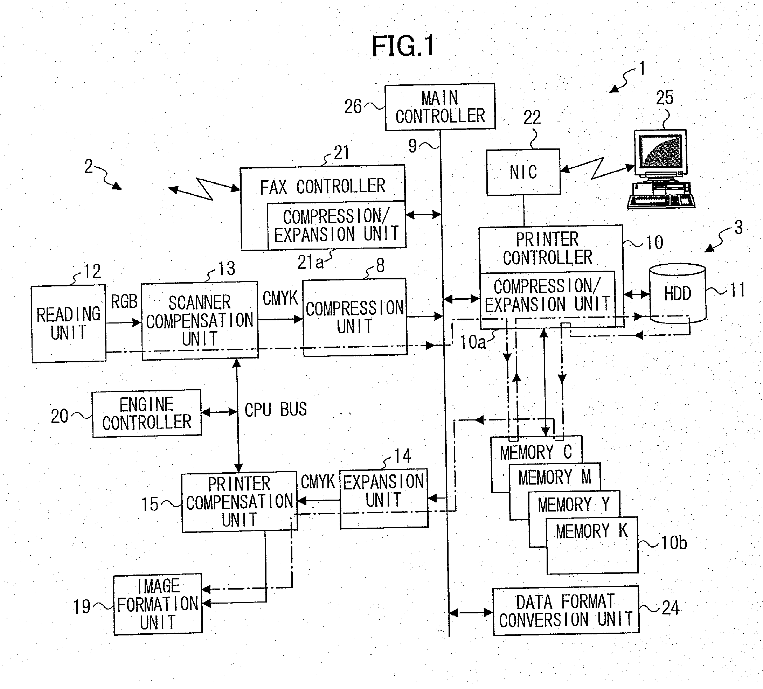

Fig. 1 shows a block diagram of a digital copier 1 according to an embodiment of the present invention. The digital copier 1 is a realization (embodiment) of the facsimile apparatus of the present invention, and is a so-called compound apparatus. Below, the outline configuration and process of the digital copier 1 are explained with reference to Fig. 1, the process including steps for reading a manuscript of an original image through steps for printing. In Fig. 1, one-dot chain lines show flows of image data.

The digital copier 1 includes an engine 2, a printer controller 3, a general-purpose bus 9, and a main controller 26. The engine 2 includes a compression unit 8, a reading unit 12, a scanner compensation unit 13, an expansion unit 14, a printer compensation unit 15, an image formation unit 19, an engine controller 20, a FAX controller 21, and a compression/expansion unit 21a. The printer controller includes a printer controller 10 that further includes a compression/expansion unit 10a, memory unit 10b that includes memory units C, M, Y and K, a hard disk drive (HDD) 11, a network interface controller (NIC) 22, a data format conversion unit 24, and a computer PC 25 that is an external apparatus to the digital copier 1. The digital copier 1 performs image processing according to the present invention, based on image data as explained below.

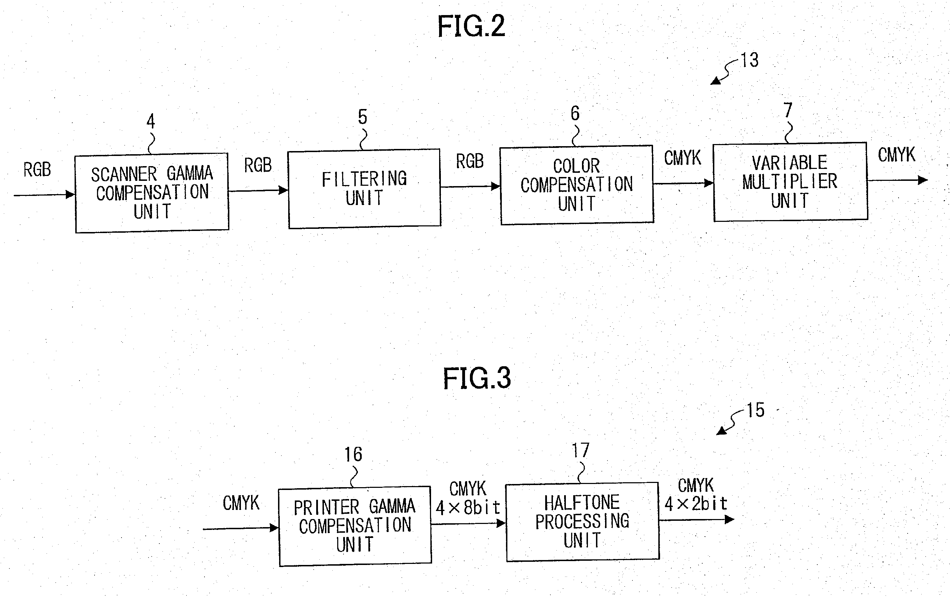

The engine controller 20 is for controlling the entirety of the engine 2, and the reading unit 12 is an image reader for reading an original image to be copied/printed, which image is read as image data with colors being separated into R, G, and B, and the RGB signal is provided to the scanner compensation unit 13. In this embodiment, a color copier is described, but the present invention can be applied to a monochrome copier. The scanner compensation unit 13 includes, as shown by Fig. 2, a scanner gamma compensation unit 4 for performing a scanner gamma process on the RGB signal, a filtering unit 5 for performing a filtering process on the gamma processed signal, a color compensation unit 6 for converting the filtered signal into color data in the CMYK system, and a variable multiplier unit 7 for performing a multiplication process on the CMYK color data at a variable rate.

The CMYK color data, consisting of 8 bits for each of the colors that are processed by the scanner compensation unit 13, are provided to the compression unit 8 (refer to Fig. 1), which handles fixed length data, and the 8-bit CMYK color data are compressed into color data of n bits (n<=8) for each of the colors. The compressed data are provided to the printer controller 10 through the general-purpose bus 9.

The semiconductor memory 10b of the printer controller 10 includes memory units that are independently prepared for every color, namely, memories C, M, Y, and K; and the compressed data are held by the semiconductor memory 10b under the control of the main controller 26. Further, the image data are provided to and held by the hard disk 11 at any time as required. This is for dispensing with repeatedly scanning an original image when printing is not normally completed due to jammed paper, and so on, and is for facilitating electronic sorting. Further, the digital copiers can hold the read image data so that a desired image can be output as required.

When outputting image data to produce an image on a medium, the image data held by the hard disk 11 are loaded into the semiconductor memory 10b of the printer controller 10, and then provided to the engine unit 2 through the general-purpose bus 9. Then, the expansion unit 14 for a fixed length converts the image data into 8-bit image data in the CMYK system. The converted CMYK image data are provided to the printer compensation unit 15.

As shown by Fig. 3, the printer compensation unit 15, serving as image processing means, includes a printer gamma compensation unit 16, and a half tone processing unit 17, and performs a predetermined image processing step. Specifically, in the printer compensation unit 15, the printer gamma compensation unit 16 performs printer gamma compensation on the image data of each color of CMYK. Further, a halftone process corresponding to the image formation unit 19 is performed by the halftone processing unit 17, and an image is formed on a medium, such as paper, by the image formation unit 19 serving as a printer engine. As for printing by the image formation unit 19, various methods are available such as an electrophotography method, an ink jet method, a sublimation type heat imprint method, a silver salt photograph method, a direct thermal recording method, and a fusion type thermal imprint method.

As shown by Fig. 1, the FAX controller 21 controls a FAX communication process of the digital copier 1, and image data are provided/received to/from a predetermined network, such as a telephone network (The FAX communication process is explained later in detail). The network interface controller (NIC) 22 is a communication interface for connecting the digital copier 1 to a network, such as a LAN.

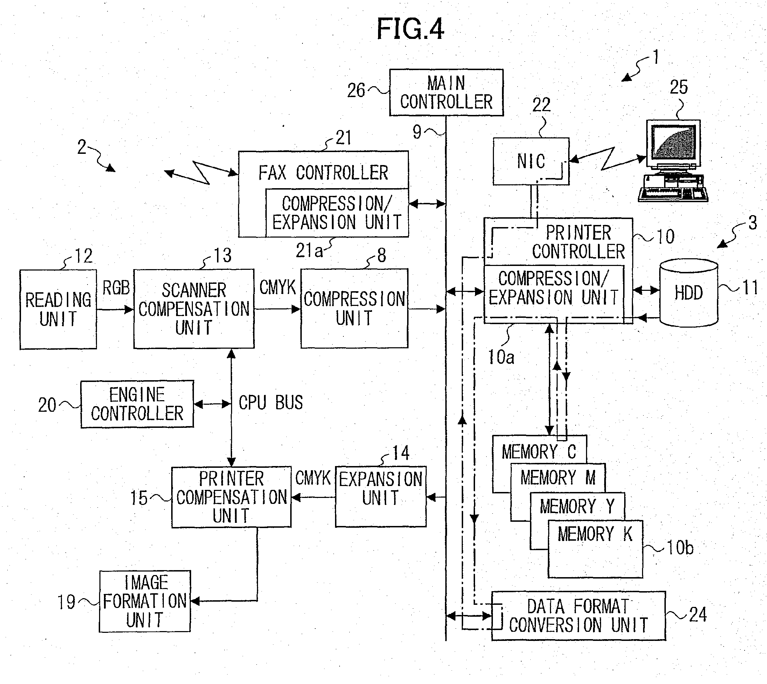

As shown in Fig. 4, the image data held by the hard disk 11 are loaded in the semiconductor memory 10b of the printer controller 10, and then provided to the data format converter 24 through the general-purpose bus 9. The data format converter 24 performs desired image processing (which is explained later in detail) on the image data, and distributes the processed data to the PC 25, and the like through the NIC 22. In this case, the image data distributed to the PC 25, and the like, may be a compressed signal, or the compressed signal after being expanded by the compression/expansion unit 10a, as desired. The main controller 26 includes a microcomputer that centrally controls the entirety of the digital copier 1.

The description so far deals with the case where the image data held by the hard disk 11 are compressed in the color space of the CMYK system. Nevertheless', the image data to be held by the hard disk 11 are image data read as an image to be copied by the digital copier 1, and may be in other color space systems such as a device-dependent color space (such as RGB, Yuv, and CMYK), and a device-independent color space (such as sRGB):

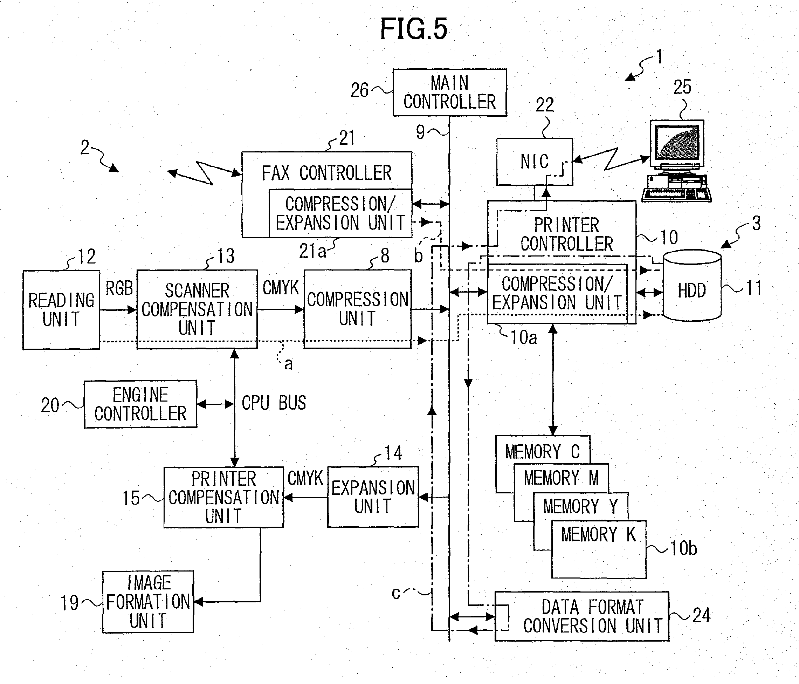

Next, with reference to Fig. 5, the FAX communication process of the digital copier 1 is explained. As shown by Fig. 5, the FAX controller 21 has a communication interface function that connects the digital copier 1 and a network such as public telephone line and the Internet for performing FAX data transmission/reception to/from the network.

When transmitting FAX, the reading unit 12 reads image data, and the read image undergo a predetermined process in the scanner compensation unit 13, and stored in the hard disk 11 (storage means, storing process) (arrows a show a flow of the image data). The image data are compressed before being stored in the hard disk 11. After storing binary image data (in monochrome for the FAX case), or multi-value image data (in color for the FAX case), the image data compressed by the compression unit 8 may be written into the hard disk 11. Or the image data may be sent to the FAX controller 21 via the general-purpose bus 9, compressed by the compression/expansion unit 21a and thereafter written into the hard disk 11.

When receiving a FAX, image data received by the FAX controller 21 are written directly into the hard disk 11 (storage means, storing process) Based on the image data stored in the hard disk 11, the image formation unit 19 forms an image.

In this manner, when transmitting/receiving a FAX, the image data stored in the hard disk 11 can be changed in data format by the data format converter 24 at the request of a PC 25, and transmitted to the PC 25 via NIC 22 (arrows show a flow of the image data.), similar to the image copying explained with reference to FIG. 4.

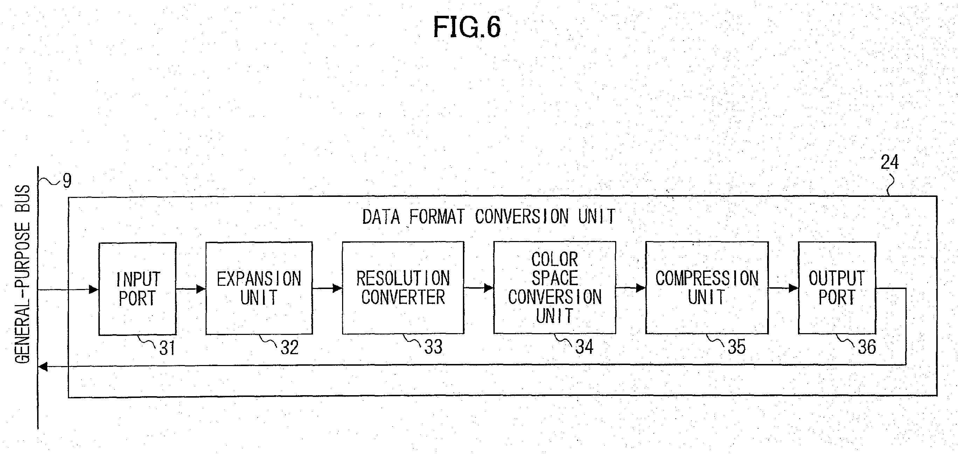

Next, a configuration of the data format converter 24 is explained. Fig. 6 is a block diagram showing the configuration of the data format converter 24. As shown by Fig. 6, an input port 31 receives image data held by the hard disk 11 through the general-purpose bus 9. The expansion unit 32 expands the image data that are compressed. The expanded color multi-value image data are converted into a predetermined resolution by the resolution converter 33, are converted to a predetermined color space by the color'space conversion unit 34, and are compressed by the compression unit 35 in a predetermined compression coding format by the compression unit 35. The compressed image data are then output through the output port 36 to the general-purpose bus 9 to be distributed to outside PCs. In this way, the image data in a first data format stored in the hard disk 11 are changed in data format and are output as second data format image data.

Next, a configuration example of the data format converter 24 is explained from other aspects.

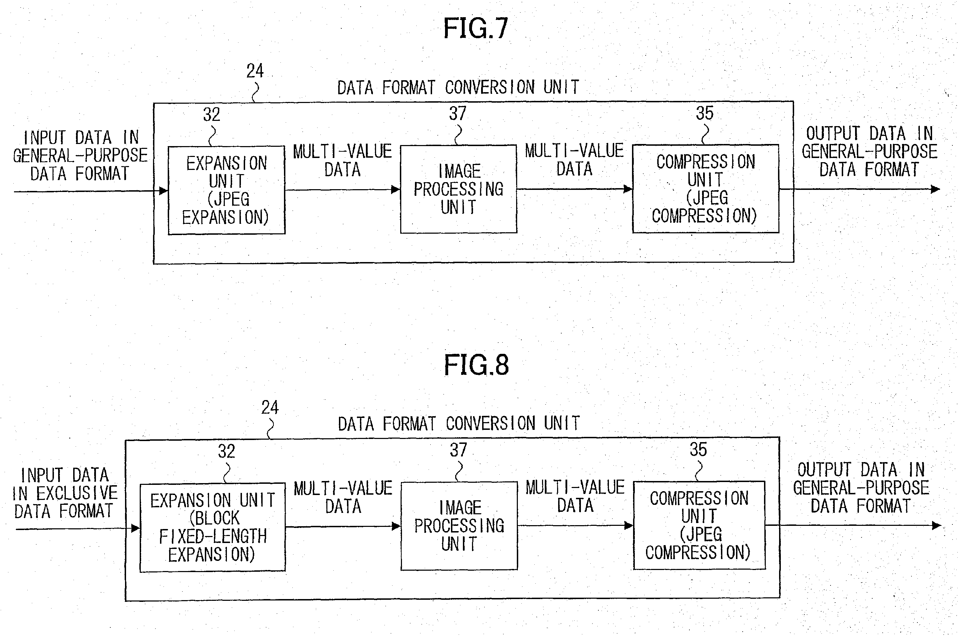

In an example shown in Fig. 7, image data input to the data format converter 24 are multi-value data, and the input multi-value image data are in a general-purpose data format that are data-compressed with a multi-value data compression method.

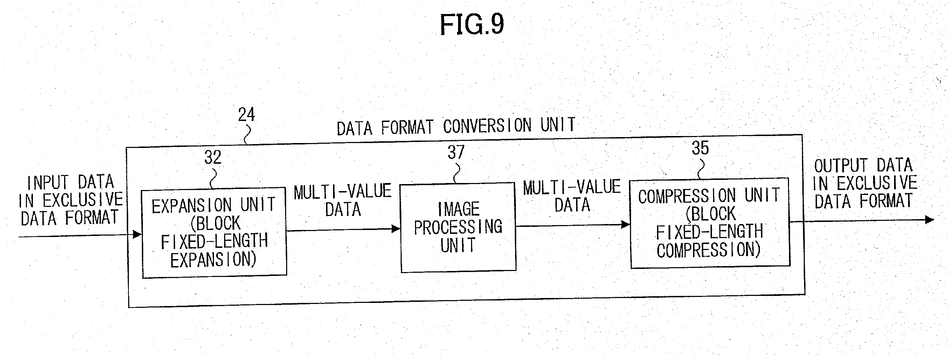

That is, the expansion/compression unit 35 performs expansion/compression in general-purpose data format. In Fig. 7, the image processing unit 37 is equipped with the aforementioned resolution converter 33 and the color space converter 34. The input port 31 and the output port 36 are equipped but not shown (as in Figs. 8 and 9).

In this example, although JPEG is employed as the general-purpose data format, other general-purpose data formats that can be generally used in PCs, such as JPEG 2000, can be employed.

In this way, by transmitting/receiving data in a general-purpose data format such as standardized JPEG, it is possible to unify the data format among transmitting/receiving units. Further, it is possible to establish a data format conversion system that maintains data quality and data transmission/reception efficiency.

When the processed image data are binary data, general-purpose standard image data compression/expansion formats such as MHMR/MMR can be used.

In an example shown in Fig. 8, the image data input to the data format converter 24 are compressed by a data format, which is exclusive of the digital copier 1. And the image data output from the data format converter 24 are provided in a general-purpose data format similar to the Fig. 7 example. The exclusive data format is a data format, which is exclusively used by the digital copier 1, but not a general-purpose data format, such as JPEG and JPEG 2000, which is usually used by the PCs, etc.

Accordingly, the expansion unit 32 employs a fixed-length block expansion method, which is also exclusively used by the digital copier 1, for expanding the data in the exclusive data format, thereby maintaining compression efficiency and data processing efficiency. The compression method of the compression unit 35 is in compliance with the general-purpose data format, similar to the Fig. 7 example.

In the example shown in Fig. 8, the exclusive data format is for exclusive fixed-length block expansion data, and therefore compression rate by the image data can be managed in a fixed manner. Further, by handling image data by blocks, it becomes easier to convert data such rotating an image direction, and rearranging. Fixed-length block coding/decoding are publicly known and therefore not explained herein (if necessary, see Japanese Patent Laid-Open Application No. 11-331844). When image data are binary, the technology disclosed in Japanese Patent Laid-Open Application No. 2002-077627 can be used.

By transmitting image data in a standardized general-purpose data format such as JPEG, it is possible to unify the data format received by units, and establish a data format conversion system maintaining both data quality and data transmission/reception efficiency.

When the image data are binary, the compression unit 35 can use a standard general-purpose compression/expansion format such as MHMR/MMR methods.

In an example shown in Fig. 9, different from the Fig. 8 example, image data output from the data format converter 24 are compressed by a data format that is exclusive for the digital copier 1, which is the same as the data format for the image data input to the data format converter 24. Therefore, the compression unit 35 compresses image data with the exclusive data format and fixed-length block compression method.

In this manner, since the exclusive data format is for the fixed-length block compression data, it is possible to manage the compression rate of the image data in a fixed manner. Further, by handling image data by blocks, it becomes easier to convert data such rotating an image direction, and rearranging. Fixed-length block coding/decoding are publicly known and therefore not explained herein (if necessary, see Japanese Patent Laid-Open Application No. 11-331844). When image data are binary, the technology disclosed in Japanese Patent Laid-Open Application No. 2002-077627 can be used.

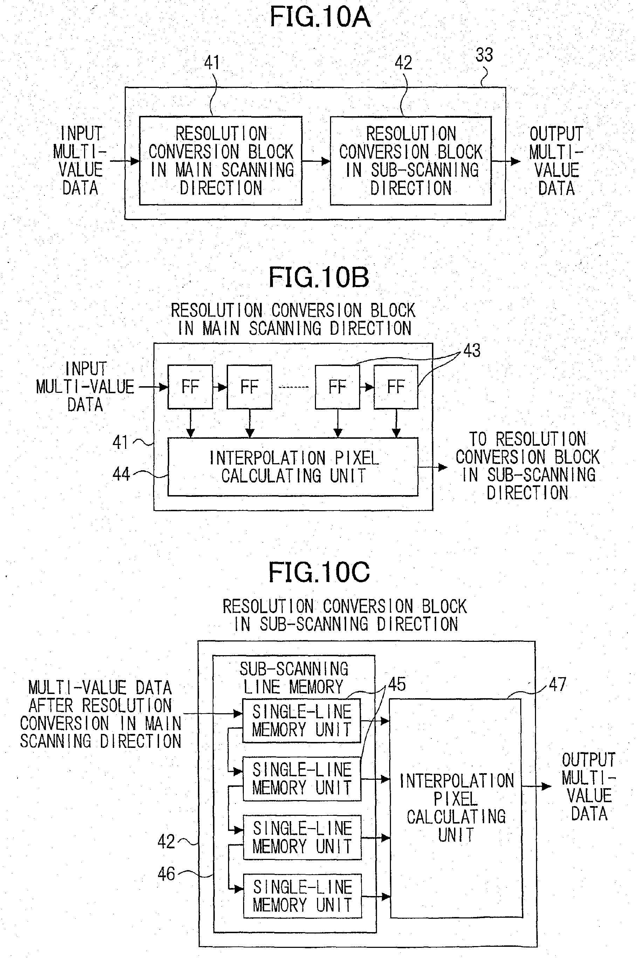

Next, the resolution converter 33 is explained in detail. In this example, target pixel data are multi-value data, and resolution can be converted freely in each of main scanning and sub-scanning directions. As shown at (a) of Fig. 10, the resolution converter 33 includes a resolution conversion block for main scanning direction 41 for carrying out resolution conversion of the input multi-value data in the main scanning direction; and a resolution conversion block for sub-scanning direction 42 for carrying out resolution conversion in the sub-scanning direction of the multi-value data of which resolution is converted in the main scanning direction.

As shown at (b) of Fig. 10, the resolution conversion block for the main scanning direction 41 includes two or more flip-flops 43, each of which is for latching 1 bit of the image data, and an interpolation pixel calculation unit 44 for calculating interpolation values for the data latched by the flip-flops 43. In order that the input multi-Value data are converted to a desired resolution, interpolation is performed by the interpolation pixel calculation unit 44, where interpolated values are obtained by a standard calculation method such as a maximum proximity pixel substitution method, a 2-adjacent pixel weighted average method, and a 3-dimensional function convolution method.

As shown at (c) of Fig. 10, the data after resolution conversion in the main scanning direction are processed by the resolution conversion block 42 for the sub-scanning direction, which includes a sub-scanning line memory 46 that further includes multiple single-line memory units 45, and an interpolation pixel calculation unit 47. There, data values of a line to be interpolated are calculated by the interpolation pixel calculation unit 47 based on data of a reference pixel in the sub-scanning direction from the sub-scanning line memory 46, wherein the single-line memory units 45 hold the data for the multiple lines after the resolution conversion in the main scanning direction. The interpolated values are obtained by a standard calculation method, such as the maximum proximity pixel substitution method, the 2-adjacent pixel weighted average method, and the 3-dimensional function convolution method.

Next, a color space conversion process carried out by the color space conversion unit 34 is explained in detail.

An example of the color space conversion using a table interpolation method is explained.

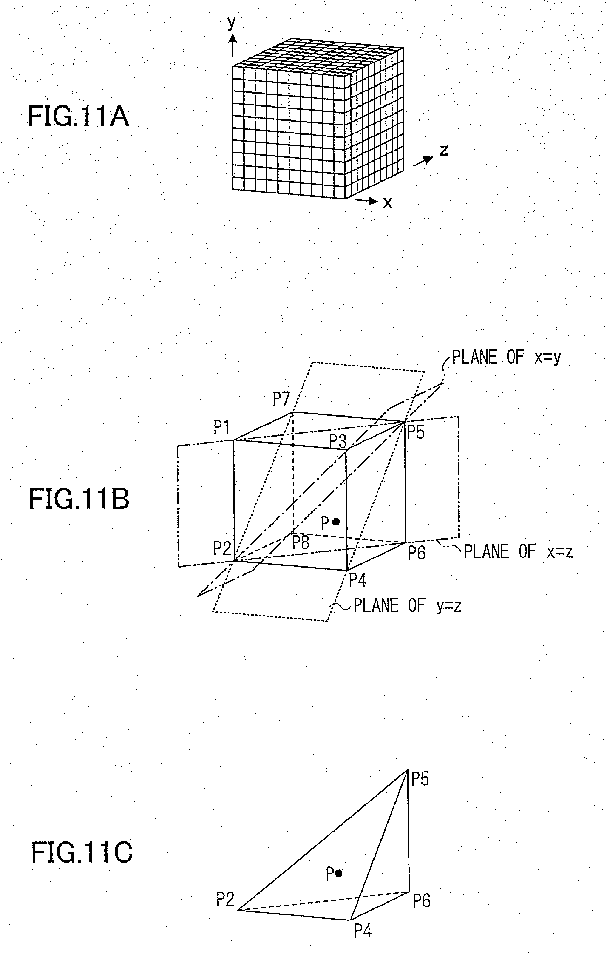

In this process, a predetermined look-up table (LUT) is used. Here, an input color space is expressed in three dimensions of xyz axes, each dimension (axis) being divided into eight blocks as shown at (a) of Fig. 11. The input color space is divided into high order coordinates and low order coordinates. For the high order blocks, the LUT is referred to; and for the low order blocks, a 3-dimensional interpolation is used. In this manner, a precise output is obtained.

Although various 3-dimensional interpolation methods are available, a tetrahedron interpolation method, which is the simplest method in linear interpolation methods, is described below, for example. As shown at (a) of Fig. 11, the tetrahedron interpolation method divides the input color space into two or more unit cubes, and each cube is further divided into six tetrahedrons that share the symmetry axes of the unit cube as shown at (b) of Fig. 11. Then, a unit tetrahedron is selected as shown at (c) of Fig. 11 based on the high-order coordinates of an input chrominance signal, and parameters (lattice point parameters) of the division boundary points (lattice points) of the selected unit tetrahedron are searched for from the LUT. Next, a linear operation is carried out on the lattice point parameters of the unit tetrahedron selected based on the low order coordinates, such that an output value is obtained.

Specifically, the following process is performed.

1. Select a unit cube that contains an input chrominance signal $X(x, y, z)$.
2. Determine low order coordinates $(lx, ly, lz)$ of a point P within the selected unit cube.
3. Select a unit tetrahedron by comparing magnitudes of the low order coordinates, perform linear interpolation for every unit tetrahedron, and calculate an output value $P_{out}$ at the point P. Operations of the linear interpolation of each unit tetrahedron are expressed by the following formulas (here, the character "1" represents the length of a side of the unit cube).

$$(l_x < l_y < l_z) P_{out} = P2 + (P5-P7) \times l_x / l + (P7-P8)$$

$$\times l_y / l + (P8-P2) \times l_z / l$$

$$(l_y <= l_x < l_z) P_{out} = P2 + (P6-P8) \times l_x / l + (P5-P6)$$

$$\times l_y / l + (P8-P2) \times l_z / l$$

$$(l_y < l_z <= l_x) P_{out} = P2 + (P4-P2) \times l_x / l + (P5-P6)$$

$$\times l_y / l + (P6-P4) \times l_z / l$$

$$(l_z <= l_y <= l_x) P_{out} = P2 + (P4-P2) \times l_x / l + (P3-P4)$$

$$xI_y/I+(P5-P3)xI_z/I$$

$$(I_z<=I_x<I_y)P_{out}=P2+(P3-P1)xI_x/I+(P1-P2)$$

$$xI_y/I+(P5-P3)xI_z/I$$

$$(I_x<I_z<=I_y)P_{out}=P2+(P5-P7)xI_x/I+(P1-P2)$$

$$xI_y/I+(P7-P1)xI_z/I$$

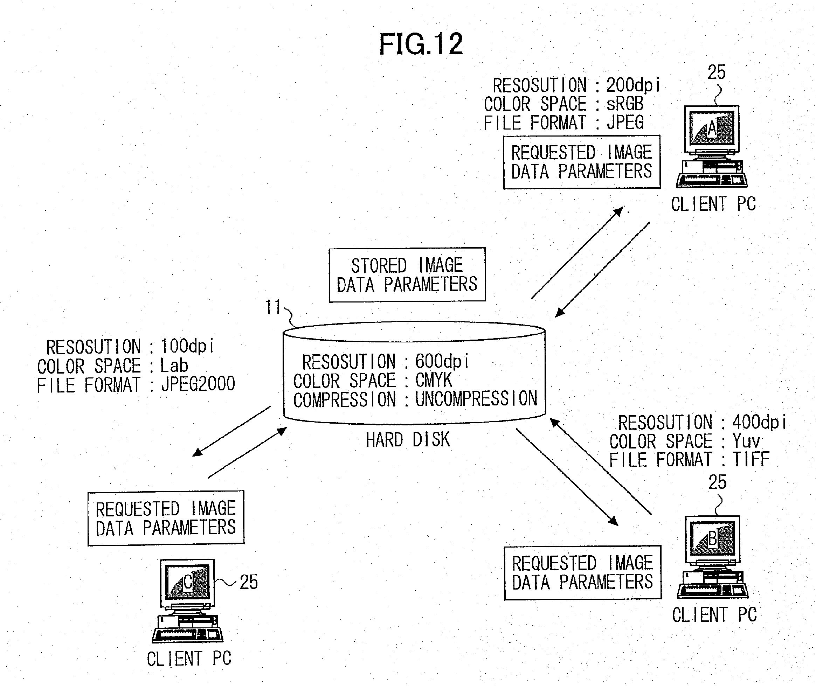

Next, an operation for outputting image data to PC 25 is concretely explained. As shown in Fig. 12, each PC 25 serving as a client determines parameters for receiving (capturing) image data from the digital copier 1, and proposes the parameters and requires image data to the digital copier 1. Based on the image data capture request signal and image data parameters stored in the hard disk 11, image data parameters in the data format converter 24 are determined.

According to the parameters, the expansion unit 32, the resolution converter 33, the color space conversion unit 34 and compression unit 35 in the data format converter 24 are changed in their parameters, and image data image-processed in the data format converter 24 are distributed to the PC 25 that is a requestor.

As mentioned above, image data stored in the hard disk 11 are, for example, color space system image data, which were read by the digital copier 1 as a copying image or a faxing image, or received from outside as a faxed image.

Assuming that the image data stored in the hard disk 11 are, for example, uncompressed data, 600 dpi resolution, CMYK system image data, and each client PC 25 shown Fig. 12 requires to receive (capture) image data in parameters below.

    Client A: 200 dpi resolution; sRGB space system JPEG image data
    Client B: 400 dpi resolution; Yuv space system TIFF image data
    Client C: 100 dpi resolution; Lab space system JPEG2000 image data

The main controller 26 receives each request and has the data format converter 24 transmit image data to each PC 25 in the requested data format.

In this case, the image data stored in the hard disk 11 are uncompressed, and therefore the expansion unit 32 provides through operations, and the resolution converter 33 determines resolution conversion parameters based on the client's resolution request and image data resolution stored in the hard disk 11. In this example, the resolution is converted from 600 dpi to 200 dpi for Client A, from 600 dpi to 400 dpi for Client B, and from 600 dpi to 100 dpi for Client C.

Next, the color space conversion unit 34 converts color space systems from CMYK to sRGB for Client A, from CMYK to Yuv for Client B, and from CMYK to Lab for Client C.

The compression unit 35 converts to JPEG file format for Client A, to TIFF file format for Client B, and to JPEG 2000 file format for Client C.

The image data stored in the hard disk 11 are the same color space system image data that are read by the digital copier 1 for copying the image. The hard disk 11 can store image data together with the identification of a PC 25 and image data parameters designated by the PC 25.

In this case, the PC 25 does not have to designate capture image data parameters when receiving the image data with the unchanged parameters stored in the hard disk 11.

Next, another configuration of the data format converter 25 is explained below.

In this example, color multi-value image data stored in the hard disk 11 are converted to monochrome binary image data and sent to a PC 25.

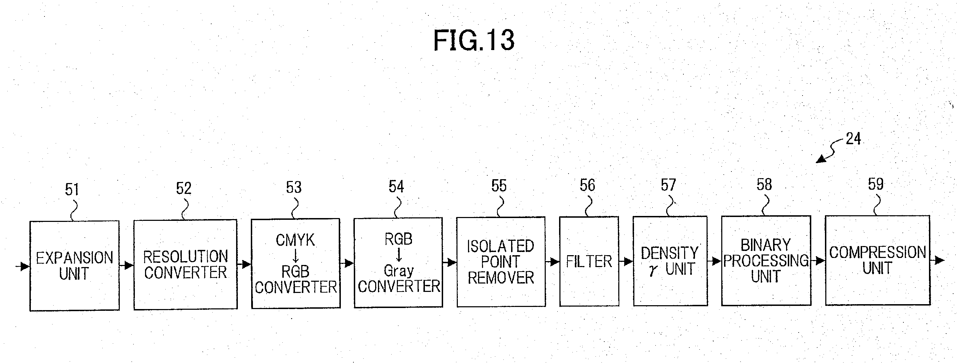

Fig. 13 is a block diagram showing another configuration of the data format converter 24. An input port 31 and output port 36 are not shown. Image data stored in the hard disk 11 are image data that are compressed in a fixed-length block multi-value compression method for each CMYK version. An expansion unit 51 expands the input image data with this compression code. A resolution converter 52 converts the image data resolution by a predetermined scale factor. A CMYK to RGB converter 53 converts the image data from the CMYK color system to a predetermined RGB color system. An RGB to Gray-scale converter 54 converts the image data from color multi-value image data to monochrome multi-value image data. An isolated point remover 55 detects isolated points among the monochrome multi-value image data by using an isolated point detection algorithm. A filter 56 performs emphasis or smoothing in a mode designated by a PC 25. A density gamma unit 57 adjusts the density of the image. A binary processing unit 58 binarizes the image data by a predetermined method. A compression unit 59 compresses data in a general-purpose compression method such as MHMR/MMR methods.

The data format converter 24 having this structure can convert color copying image data to monochrome binary image data and distribute the image data to a PC 25. Because of the large volume of color image data, a PC 25 sometimes needs to receive monochrome binary image data. This example can satisfy such needs.

Next, each block shown in Fig. 13 is explained in detail.

The color conversion in the CMYK to RGB converter 53 is performed the same as explained above with reference to Fig. 11.

An operation in the filter 56 is explained. Filtering is for modulating MTF values of the image data, and two kinds of filtering are available. Namely, one is to raise the MTF values such that an edge of the image is emphasized as compared with the original image data, and the other is to lower the MTF values such that the image is smoothed.

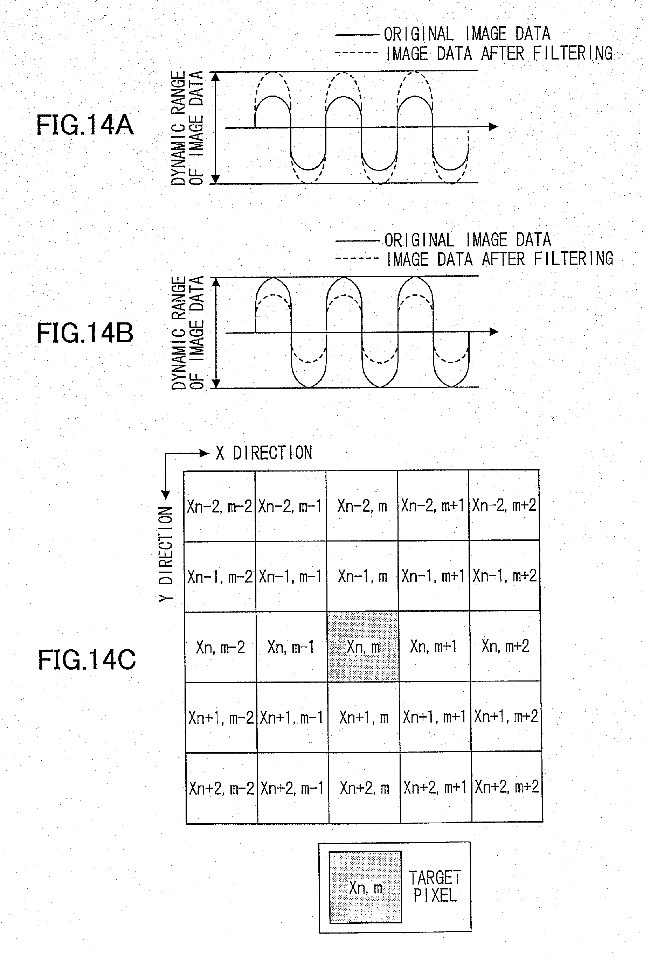

With reference to Fig. 14, when filtering raises the MTF values of the image data, peaks and valleys of the original image frequency (shown by a solid-line curve at (a)) are emphasized as shown by a dashed-line curve. Here, the vertical axis represents the dynamic range of the image density, and the horizontal axis represents "raster form reference" of the image data.

Conversely, when the filtering lowers the MTF values of the image data, the peaks and the valleys of the original image frequency (solid-line curve) are suppressed as indicated by a dashed-line curve shown at (b) of Fig. 14. In the actual process, the image data are treated line by line, where the directions of the raster form of the 2-dimensional image data are made into the directions of the line (x directions), and the other directions are made into the directions of y; and a target pixel value is computed based on surrounding pixel values.

At (c) of Fig. 14, twenty-five (5x5) pixels are symbolically shown with the target pixel at the center being identified as $X_{n, m}$, and surrounded by other pixels.

When raising the MTF values of the image data, coefficients (matrix coefficients) constituted by differential coefficients of the image frequency that needs to be emphasized are calculated by making resolution of the image data be the key, the coefficients being arranged in the shape of a matrix. Here, the matrix coefficients are expressed by $A_{m-2,n-2}$, $A_{m-2,n-1}$, ---, $A_{m, n}$, $A_{m+2,n+1}$, and through $A_{m+2,n+2}$. Then, the pixel value Y of the target pixel after filtering for raising the MTF values of the image data is obtained by the following formulas.

$$B= (X_{m-2, n-2} \times A_{m-2,n-2}) + (X_{m-2,n-1} \times A_{m-2,n-1}) + -- + (X_{m+2,n+2} \times A_{m+2,n+2}) \qquad -- (1)$$

$$D = B \times C \qquad -- (2)$$

$$Y = D + X_{n, m} \qquad -- (3)$$

The formula (1) calculates a matrix product for the matrix coefficients obtained by the differential coefficients, and the image data. The value B obtained by the formula (1) serves as the image emphasis component in the filtering process. Further, the formula (2) is for adjusting (increasing or decreasing) the degree of the image emphasis value D, the value C being a desired constant. The image emphasis value D obtained according to the formula (2) is added to the target pixel value (the formula (3)) such that the pixel value Y of the target pixel after filtering is obtained. In this manner, all the pixels of the image data are converted, and the MTF values of the image data are raised.

When smoothing the image data, an average of pixel values of the target pixel and its circumferential pixels is calculated by adding the pixel values of the target pixel and its circumferential pixels, and dividing the sum thereof by the number E of the pixels. In this manner, all the pixels of the image data are converted such that the image data are smoothed. It is also possible to adjust the degree of smoothing by assigning different weights to the target pixel and the circumferential pixels. In this case, the value Y of the target pixel is adjusted by substituting desired integers into the matrix coefficients of the following formula (4).

$$Y=\{(X_{m-2,n-2} \times A_{m-2, n-2}) + (X_{m-2,n-1} \times A_{m-2,n-1)} + --$$

$$+ (X_{m+2,n+2} \times A_{m+2,n+2)}\}/E \qquad -- (4)$$

The process as described above realizes the filtering for modulating the MTF of the image data of multiple values. Accordingly, if the original image is based on characters, the quality of the image is improved by emphasizing the MTF. If the original image is based on patterns, the quality of the image is improved by giving smoothness to a certain extent. Thus, a high-quality image can be obtained by selecting filtering factors according to the kind of original image.

Next, an operation in the density gamma unit 57 is explained.

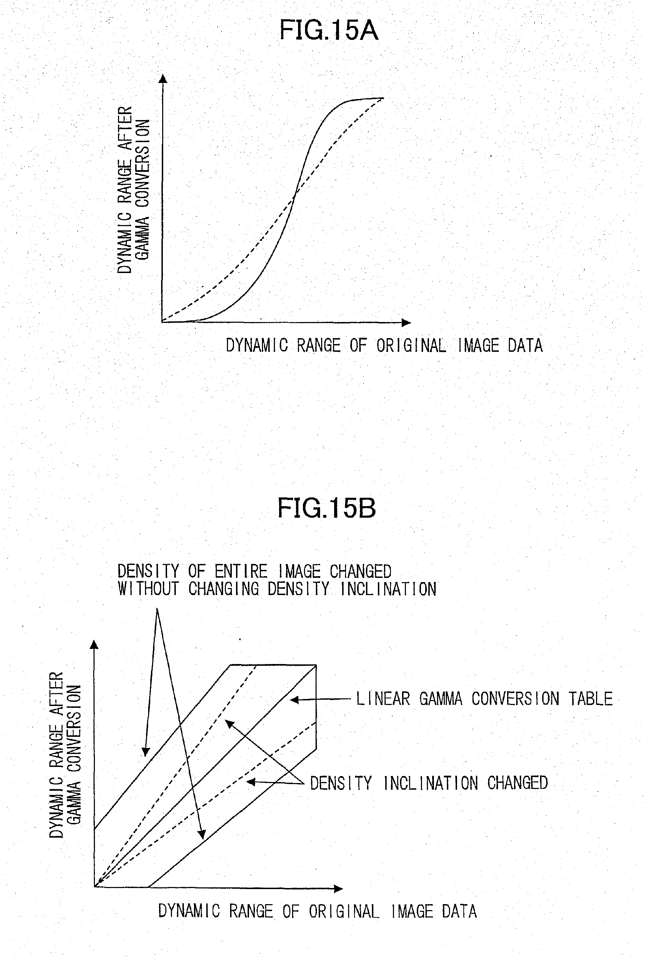

The gamma compensation process is for adjusting the image density slope, and the image density property of an image. At (a) of Fig. 15, a curve in the solid line represents characteristics of a first gamma compensation table, and according to the curve, a value of original image data (horizontal axis) is converted to a value of the image data after gamma compensation (vertical axis). Image data having a desired image density distribution are obtained by changing the curve of the gamma compensation table. For example, a curve in the dashed line at (a) of Fig. 15 represents characteristics of a second gamma compensation table, where an image density slope that is smoother than the image density slope obtained by the first gamma compensation table is obtained. Here, the image density becomes high as it is on the arrow side of the graph (i.e., to the right and to the top).

Methods of preparing various gamma compensation tables are explained with reference to a linear gamma compensation table (solid line) that is extended in the direction of 45 degrees from the point of origin as shown at (b) of Fig. 15.

When changing the whole image density without changing the image density property, the linear gamma compensation table is moved parallel to the horizontal axis as shown at (b) of Fig. 15. When changing the density inclination, inclination of the gamma compensation table is changed as shown by dashed lines at (b) of Fig. 15. Further, when changing the image density property as desired, a gamma compensation table represented by a curve, such as shown at (a) of Fig 15, is used.

In this manner, in the density gamma unit 57, the gamma compensation process that is capable of changing the image density slope, and capable of changing the image density property is realized for the image data having multiple values; and a high-quality image is produced by selecting a gamma curve according to the kind of image.

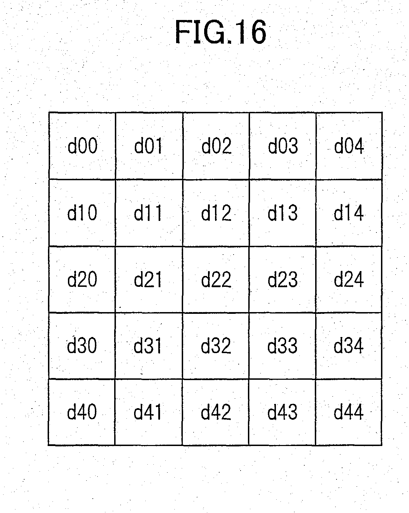

An operation of the isolated point remover 55 is explained below. When an image is filtered by the emphasis filter 56, noise included in the original image is also emphasized, resulting in lots of dust making the image dirty. In this case, the isolated point remover 55 adaptively removes isolated points. Although various kinds of algorithms can be used for removing isolated points, a matrix method illustrated in Fig. 16 is explained here.

The isolated point remover 55 performs isolated point determination in 5x5 blocks as shown in Fig. 16. In this example, a target pixel is d22. If all pixels other than the target pixel are smaller than a predetermined threshold TH1, the target pixel is replaced by a white pixel (pixel value = 0).

In this manner, noise in the image read by the reading unit 12 can be removed.

In case where the image data stored in the hard disk 11 are data that have been obtained by reading a natural image, the isolated point removing is effective. On the other hand, if the image data stored in the hard disk 11 are data that have been electronically made, such as printer RIP data, the isolated point removing is not required.

An operational parameter for the isolated point removing can be changed depending on types of the image data transferred to a PC 25, and high quality image data can be obtained.

Next, an operation performed by the binary processing unit 58 is explained below.

The binary processing unit 58 carries out the halftone process on multi-value image data and binarizes them. The halftone process quantizes multi-value image data to binary data or small number value data. There are many methods for the halftone process. Generally used sample quantization method, dithering method and error diffusion method are explained herein. The number of quantization steps is fixed to two for explanation convenience.

First, in the simple quantizatoin method, any given value in the dynamic range of multi-value image data is defined as a threshold, and the image data are binarized (changed to two-step data). For example, if multi-value image data having the 256-step dynamic range from 0 to 255 are quantized to 0 or 1 and the threshold is 128, then image data of 100 is quantized to 0 and an image data of 200 is quantized to 1.

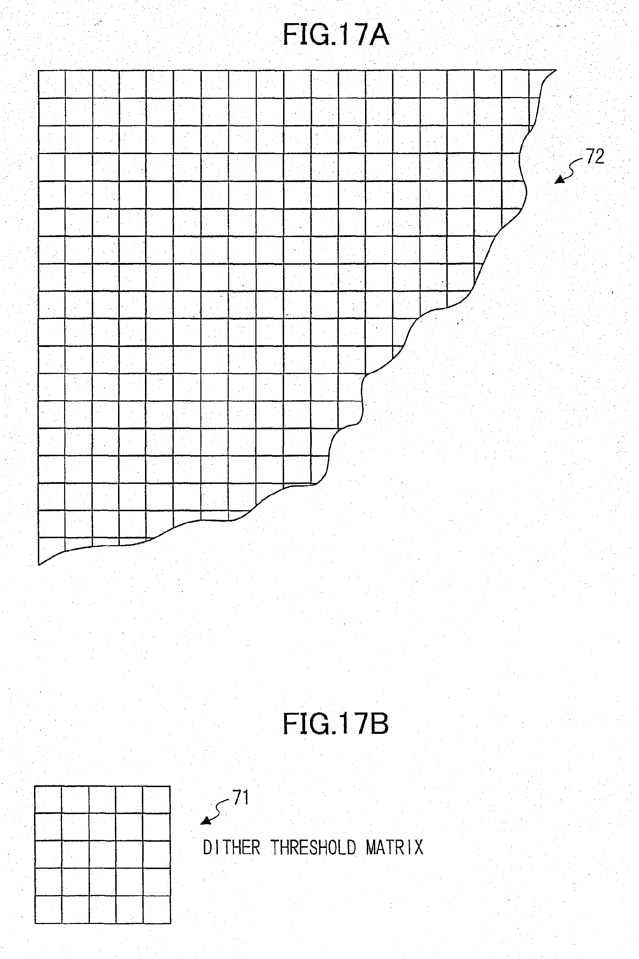

The dithering method employs a matrix-like threshold. As shown in Fig. 17, some pieces of threshold matrix 71 shown in Fig. 17(b) are fit into image data 72 shown in Fig. 17(a) with one threshold being one pixel, and each pixel is binarized. A threshold in the matrix can be varied within the image data dynamic range, and the binarized image data can represent half-tone density, as trade-off for resolution.

The error diffusion method performs a binarization process using any threshold, similar to the simple quantization method, and accumulates quantization errors. That is, the error diffusion method is a kind of a halftone process in which a pixel is quantized with consideration of errors that have been generated while quantizing close pixels, in order to try to reduce the total error in the quantized image data.

If 256-step multi-value image data between 0 and 255 are quantized to 0 or 1, image data having a value of 100 shall be changed to a quantization value of 0. In this case, although the image data originally have a value of 100 as halftone information, the image data become the lowest value 0 (white) and the halftone information is lost. Therefore, the quantization error of the image data is 100 = 100 - 0. Other image data having a value of 200 are changed to a quantization value of 1. In this case, although the image data originally have a value of 200 as halftone information, the image data become the highest value 1 (black) and the halftone information is lost. Therefore, the quantization error of the image data is -55 = 200 - 255.

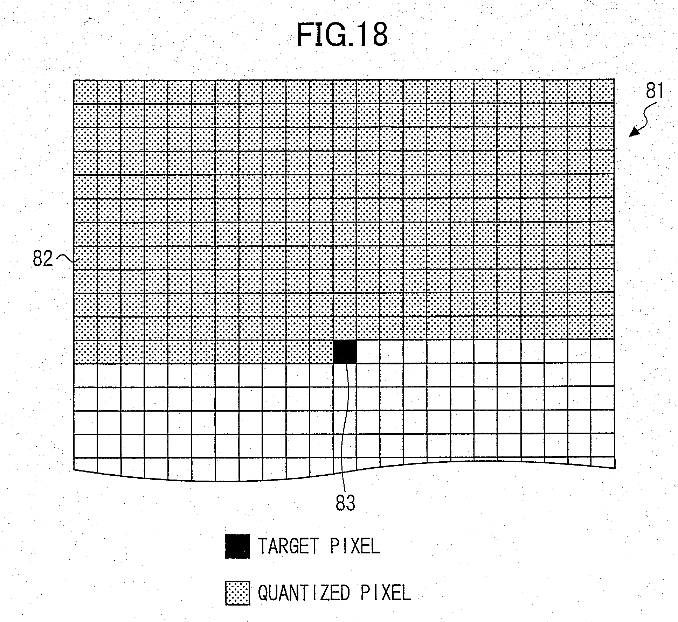

These quantization errors are stored each time whenever a pixel is quantized. As shown in Fig. 18, shadowed pixels 82 indicate pixels that are already quantized in raster sequence. A black pixel 83 is a target pixel for quantization. After an averaged value of quantization errors obtained from surrounding pixels is added to the target pixel 83, the target pixel 83 is quantized in order to compensate for the lost halftone information, from the viewpoint of the total image data.

By employing the above explained methods, the binary processing unit 58 can binarize multi-value image data, thereby the data amount can be reduced and an adequate halftone process can be selected depending on types of image data, resulting in high quality image.

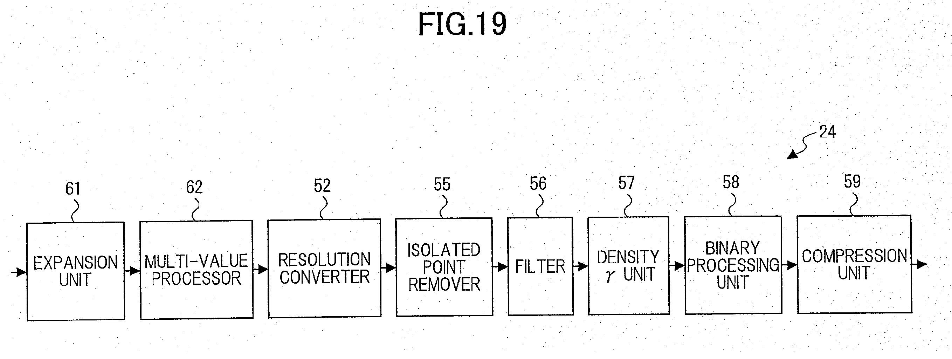

Fig. 19 is a block diagram showing another configuration of the data format converter 24. In this example, image data stored in the hard disk 11 are monochrome binary image data.

An expansion unit 61 expands the monochrome binary image data, and a multi-value processor 62 converts the expanded monochrome binary image data to multi-value image data. Other blocks are the same as blocks with the same reference numerals shown in Fig. 13 and their explanations are omitted.

By the data format converter 24 shown in Fig. 19, monochrome binary image data stored in the hard disk 11 can undergo predetermined processes and can be sent as monochrome binary image data to a PC 25 and others.

In Figs. 13 and 19, both input data and output data can be in exclusive data format or in general-purpose data format, as explained with reference to Figs 7-9.

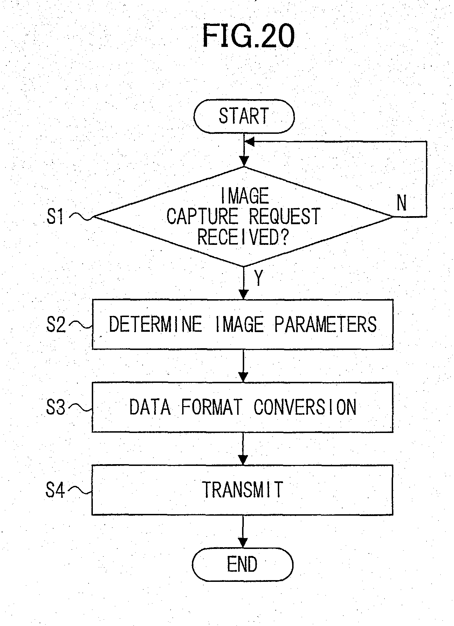

Next, a series of processes performed by the digital copier 1 using the data format converter 24 are explained with reference to a flow chart shown in Fig. 20.

First, the main controller 26 receives an image capture request signal from the PC 25 (receiving means, and receiving function) (Y at Step S1); and determines image data parameter values to be set up to the data format converter 24 (Step S2) based on the attributes of the image, information about the attributes being included in the image capture request signal received from the PC 25, and the attributes of the image data held by the hard disk 11, capturing of the image data being requested. Then, according to the image data parameter values, the data format conversion process as described above is carried out by the data format converter 24 on the image data held by the hard disk 11. That is, the data format (the first data format) of the image data held by the hard disk 11 is converted to another data format, i.e., the second data format (data format conversion means, and data format conversion function) (Step S3), and the image data that are converted in this manner are transmitted to the PC 25 (the transmitting means, and the transmitting function) (Step S4).

In this manner, if the PC 25 requests, for example, color multi-value image data compressed by the JPEG method at a resolution of 600 dpi and in the color space of sRGB, and if, for example, the image data held by the hard disk 11 are at a resolution of 600 dpi, in the color space of YMCK, and not compressed, the data format converter 24 converts the image data held by the hard disk 11 as required by the PC 25, and provides the converted image data to the PC 25.

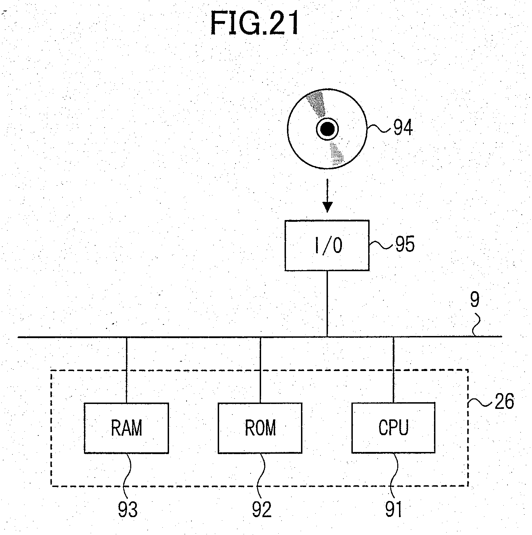

Fig. 21 is a block diagram showing electric connections around the main controller 26. The main controller 26 includes a CPU 91 that performs various operations, and centrally controls each part of the digital copier 1, which CPU 91 is connected to a ROM 92 and a RAM 93 through the general-purpose bus 9. The ROM 92 serving as a memory medium holds the control program described above with reference to Figs. 18-20. (The ROM 92 may be also equipped with a non-volatile memory, such as a flash memory. In this case, the control program may be held by a storage medium 94, such as an optical disk, read by a predetermined apparatus, such as an optical disk apparatus, and loaded into the non-volatile memory through an I/O Port 95, such that the control program is executed.

As described above, according to embodiments of the present invention the following advantages are obtained.

The image data of the facsimile apparatus can be utilized by external PCs. Irrespective of receiving sources of image data, the image data formed by the facsimile apparatus can be changed to a certain image quality. The image data stored in the memory device can be converted so as to be used by a variety of types of terminals.

The image data can be transmitted in a data format requested by an external client PC, and the like.

The data format in the facsimile apparatus can be converted so as to be utilized by an external client PC, and others.

A general-purpose data format in the facsimile can be converted to another general-purpose data format usable by an external client PC, and others.

An exclusive format in the facsimile can be converted to a general-purpose data format usable by an external client PC, and others.

An exclusive data format in the facsimile can be converted to another exclusive data format usable by an external client PC, and others.

The image data in the facsimile can be converted to another color space data format usable by an external client PC, and others.

The image data in the facsimile can be converted to a device-independent color space data format usable by an external client PC, and others.

The image data in the facsimile can be converted to a monochrome binary data format or multi-value image data format usable by an external client PC, and others.

A variety of image processes can be performed before conversion to the monochrome binary data, so as to satisfy a request by an external client PC, and others.

The image data in the facsimile can be converted to a monochrome binary data format or multi-value image data format usable by an external client PC, and others.

A variety of image processes can be performed before conversion to the monochrome binary data, so as to satisfy a request by an external client PC, and others.

The image data in the facsimile can be converted to a predetermined resolution so as to satisfy a request by an external client PC, and others.

The image data in the facsimile can be filtered and transmitted so as to satisfy a request by an external client PC, and others.

The image data in the facsimile can be gamma-converted and transmitted so as to satisfy a request by an external client PC, and others.

Isolated points can be removed from image data in the facsimile so as to satisfy a request by an external client PC, and others.

Further, the present invention is not limited to these embodiments, but various variations and modifications may be made without departing from the scope of the present invention.

The present application is based on Japanese Priority Application No. 2003-130659 filed on May 08, 2003, with the Japanese Patent Office, the entire contents of which are hereby incorporated by reference.

**Claims**

1. A facsimile apparatus equipped with a reader for reading original image data, a communication interface for transmitting the read image data to a predetermined network and receiving image data from the network, and a printer engine for forming an image on a medium based on the received image data, comprising:

   storing means for storing the image data in a first data format;
   receiving means for receiving a request that the image data be sent to a predetermined transmission destination;
   data format conversion means for converting the stored image data from the first data format into a second data format; and
   transmitting means for transmitting the converted image data to the requested transmission destination.

2. The facsimile apparatus as claimed in claim 1 wherein,
   the receiving means receives a request to send the image data in the second data format.

3. The facsimile apparatus as claimed in claim 1 or 2 wherein,
   the data format conversion means converts between the first and second data formats.

4. The facsimile apparatus as claimed in claim 1,2 or 3 wherein,
   the first and second data formats are general-purpose data formats.

5. The facsimile apparatus as claimed in claim 1,2 or 3 wherein,
   the first data format is a data format exclusive to the facsimile apparatus and the second data format is a general-purpose data format.

6. The facsimile apparatus as claimed in claim 1,2 or 3 wherein,
   the first and second data formats are a data format exclusive to the facsimile apparatus.

7. The facsimile apparatus as claimed in any one of the preceding claims wherein,
   the data format conversion means converts color spaces of image between the first and second data formats.

8. The facsimile apparatus as claimed in claim 7 wherein,
   the second data format color space in the data format conversion means is a device-independent color space.

9. The facsimile apparatus as claimed in any one of the preceding claims wherein,
   in the data format conversion means, the first data format is a predetermined color space image data format and the second data format is a monochrome binary data format or multi-value image data format.

10. The facsimile apparatus as claimed in claim 9 wherein,
    the data format conversion means converts the first data format data to monochrome multi-value image data and further converts them to the monochrome binary image data.

11. The facsimile apparatus as claimed in anyone of claims 1 to 8 wherein,
    in the data format conversion means, the first data format is a monochrome binary data format or a multi-value image data format and the second data format is the monochrome binary data format or the multi-value image data format.

12. The facsimile apparatus as claimed in claim 11 wherein,
    the data format conversion means converts the first data format data to multi-value image data and further converts them to the second data format data.

13. The facsimile apparatus as claimed in any one of the preceding claims wherein,
    in the data format conversion means, the first and second data formats have different resolutions.

14. The facsimile apparatus as claimed in any one of the preceding claims wherein,
    the data format conversion means performs a space filtering process on the first data format image data.

15. The facsimile apparatus as claimed in any one of the preceding claims wherein,
    the data format conversion means performs a gamma conversion process on the first data format image data.

16. The facsimile apparatus as claimed in any one of the preceding claims wherein,
    the data format conversion means performs an isolated point removal process on the first data format image data.

17. A computer program for controlling a facsimile apparatus equipped with a reader for reading original image data, a communication interface for transmitting the read image data to a predetermined network and receiving image data from the network, and a printer engine for forming an image on a medium based on the received image data, the computer program comprising code means which, when executed on a computer system, instructs the facsimile apparatus to effect a method comprising:

    a storing function for storing the image data in a first data format;
    a receiving function for receiving a request that the image data be sent to a predetermined transmission destination;
    a data format conversion function for converting the stored image data from the first data format into a second data format; and
    a transmitting function for transmitting the converted image data to the requested transmission destination.

18. The program as claimed in claim 17 wherein,
    the receiving function receives a request to send the image data in the second data format.

19. A recording medium having recorded thereon the program as claimed in claims 17 and 18.

# FIG.1

MAIN CONTROLLER — 26

9

FAX CONTROLLER — 21
COMPRESSION/ EXPANSION UNIT
21a

2

NIC — 22

25

1

PRINTER CONTROLLER — 10
COMPRESSION/ EXPANSION UNIT
10a

3

HDD — 11

READING UNIT — 12    RGB    SCANNER COMPENSATION UNIT — 13    CMYK    COMPRESSION UNIT — 8

ENGINE CONTROLLER — 20    CPU BUS

PRINTER COMPENSATION UNIT — 15    CMYK    EXPANSION UNIT — 14

MEMORY C
MEMORY M
MEMORY Y
MEMORY K — 10b

IMAGE FORMATION UNIT — 19

DATA FORMAT CONVERSION UNIT — 24

EP 1 475 951 A2

# FIG.2

RGB → | SCANNER GAMMA COMPENSATION UNIT (4) | —RGB→ | FILTERING UNIT (5) | —RGB→ | COLOR COMPENSATION UNIT (6) | —CMYK→ | VARIABLE MULTIPLIER UNIT (7) | —CMYK→

13

# FIG.3

CMYK → | PRINTER GAMMA COMPENSATION UNIT (16) | CMYK 4×8bit → | HALFTONE PROCESSING UNIT (17) | CMYK 4×2bit →

15

EP 1 475 951 A2

# FIG.4

FIG.5

# FIG.6

**GENERAL-PURPOSE BUS** ~9

**24**

DATA FORMAT CONVERSION UNIT

| INPUT PORT | EXPANSION UNIT | RESOLUTION CONVERTER | COLOR SPACE CONVERSION UNIT | COMPRESSION UNIT | OUTPUT PORT |
|---|---|---|---|---|---|
| 31 | 32 | 33 | 34 | 35 | 36 |

## FIG.7

EP 1 475 951 A2

**DATA FORMAT CONVERSION UNIT** — 24

INPUT DATA IN GENERAL-PURPOSE DATA FORMAT →

| 32 | 37 | 35 |
|---|---|---|
| EXPANSION UNIT (JPEG EXPANSION) | IMAGE PROCESSING UNIT | COMPRESSION UNIT (JPEG COMPRESSION) |

MULTI-VALUE DATA → MULTI-VALUE DATA →

→ OUTPUT DATA IN GENERAL-PURPOSE DATA FORMAT

## FIG.8

**DATA FORMAT CONVERSION UNIT** — 24

INPUT DATA IN EXCLUSIVE DATA FORMAT →

| 32 | 37 | 35 |
|---|---|---|
| EXPANSION UNIT (BLOCK FIXED-LENGTH EXPANSION) | IMAGE PROCESSING UNIT | COMPRESSION UNIT (JPEG COMPRESSION) |

MULTI-VALUE DATA → MULTI-VALUE DATA →

→ OUTPUT DATA IN GENERAL-PURPOSE DATA FORMAT

# FIG.9

EP 1 475 951 A2

DATA FORMAT CONVERSION UNIT  
24

INPUT DATA
IN EXCLUSIVE
DATA FORMAT

32
EXPANSION UNIT
(BLOCK
FIXED-LENGTH
EXPANSION)

MULTI-VALUE
DATA

37
IMAGE
PROCESSING
UNIT

MULTI-VALUE
DATA

35
COMPRESSION UNIT
(BLOCK
FIXED-LENGTH
COMPRESSION)

OUTPUT DATA
IN EXCLUSIVE
DATA FORMAT

# FIG.10A

INPUT MULTI-VALUE DATA → | RESOLUTION CONVERSION BLOCK IN MAIN SCANNING DIRECTION (41) | → | RESOLUTION CONVERSION BLOCK IN SUB-SCANNING DIRECTION (42) | → OUTPUT MULTI-VALUE DATA

33

# FIG.10B

RESOLUTION CONVERSION BLOCK
IN MAIN SCANNING DIRECTION

INPUT MULTI-VALUE DATA → FF → FF → ------- → FF → FF   43

41
44

INTERPOLATION PIXEL CALCULATING UNIT → TO RESOLUTION CONVERSION BLOCK IN SUB-SCANNING DIRECTION

# FIG.10C

RESOLUTION CONVERSION BLOCK
IN SUB-SCANNING DIRECTION

MULTI-VALUE DATA AFTER RESOLUTION CONVERSION IN MAIN SCANNING DIRECTION →

SUB-SCANNING LINE MEMORY   45

SINGLE-LINE MEMORY UNIT
SINGLE-LINE MEMORY UNIT
SINGLE-LINE MEMORY UNIT
SINGLE-LINE MEMORY UNIT

42
46

47

INTERPOLATION PIXEL CALCULATING UNIT → OUTPUT MULTI-VALUE DATA

FIG.11A

FIG.11B

FIG.11C

# FIG.12

RESOSUTION : 200dpi
COLOR SPACE : sRGB
FILE FORMAT : JPEG

REQUESTED IMAGE
DATA PARAMETERS

25

CLIENT PC

STORED IMAGE
DATA PARAMETERS

11

RESOSUTION : 600dpi
COLOR SPACE : CMYK
COMPRESSION : UNCOMPRESSION

HARD DISK

RESOSUTION : 100dpi
COLOR SPACE : Lab
FILE FORMAT : JPEG2000

RESOSUTION : 400dpi
COLOR SPACE : Yuv
FILE FORMAT : TIFF

25

REQUESTED IMAGE
DATA PARAMETERS

25

CLIENT PC

REQUESTED IMAGE
DATA PARAMETERS

CLIENT PC

EP 1 475 951 A2

EP 1 475 951 A2

# FIG.13

~24

| 51 | 52 | 53 | 54 | 55 | 56 | 57 | 58 | 59 |
|---|---|---|---|---|---|---|---|---|
| EXPANSION UNIT | RESOLUTION CONVERTER | CMYK ↓ RGB CONVERTER | RGB ↓ Gray CONVERTER | ISOLATED POINT REMOVER | FILTER | DENSITY $\gamma$ UNIT | BINARY PROCESSING UNIT | COMPRESSION UNIT |

FIG.14A

ORIGINAL IMAGE DATA
IMAGE DATA AFTER FILTERING

DYNAMIC RANGE
OF IMAGE DATA

FIG.14B

ORIGINAL IMAGE DATA
IMAGE DATA AFTER FILTERING

DYNAMIC RANGE
OF IMAGE DATA

FIG.14C

X DIRECTION

Y DIRECTION

| $X_{n-2, m-2}$ | $X_{n-2, m-1}$ | $X_{n-2, m}$ | $X_{n-2, m+1}$ | $X_{n-2, m+2}$ |
|---|---|---|---|---|
| $X_{n-1, m-2}$ | $X_{n-1, m-1}$ | $X_{n-1, m}$ | $X_{n-1, m+1}$ | $X_{n-1, m+2}$ |
| $X_{n, m-2}$ | $X_{n, m-1}$ | $X_{n, m}$ | $X_{n, m+1}$ | $X_{n, m+2}$ |
| $X_{n+1, m-2}$ | $X_{n+1, m-1}$ | $X_{n+1, m}$ | $X_{n+1, m+1}$ | $X_{n+1, m+2}$ |
| $X_{n+2, m-2}$ | $X_{n+2, m-1}$ | $X_{n+2, m}$ | $X_{n+2, m+1}$ | $X_{n+2, m+2}$ |

| $X_{n, m}$ | TARGET PIXEL |
|---|---|

# FIG.15A

DYNAMIC RANGE AFTER GAMMA CONVERSION

DYNAMIC RANGE OF ORIGINAL IMAGE DATA

# FIG.15B

DENSITY OF ENTIRE IMAGE CHANGED
WITHOUT CHANGING DENSITY INCLINATION

DYNAMIC RANGE AFTER GAMMA CONVERSION

LINEAR GAMMA CONVERSION TABLE

DENSITY INCLINATION CHANGED

DYNAMIC RANGE OF ORIGINAL IMAGE DATA

# FIG.16

| | | | | |
|---|---|---|---|---|
| d00 | d01 | d02 | d03 | d04 |
| d10 | d11 | d12 | d13 | d14 |
| d20 | d21 | d22 | d23 | d24 |
| d30 | d31 | d32 | d33 | d34 |
| d40 | d41 | d42 | d43 | d44 |

# FIG.17A

72

# FIG.17B

71

DITHER THRESHOLD MATRIX

# FIG.18

81

82

83

■ TARGET PIXEL

QUANTIZED PIXEL

FIG.19

EP 1 475 951 A2

~24

| 61 | 62 | 52 | 55 | 56 | 57 | 58 | 59 |
|----|----|----|----|----|----|----|----|
| EXPANSION UNIT | MULTI-VALUE PROCESSOR | RESOLUTION CONVERTER | ISOLATED POINT REMOVER | FILTER | DENSITY $\gamma$ UNIT | BINARY PROCESSING UNIT | COMPRESSION UNIT |

# FIG.20

```
                  ┌─────────┐
                  │  START  │
                  └─────────┘
                       │
                       ▼
              ╱─────────────────╲
            ╱       IMAGE         ╲        N
  S1 ─────<   CAPTURE REQUEST      >────────┐
            ╲     RECEIVED?       ╱         │
              ╲─────────────────╱           │
                       │ Y                  │
                       ▼                    │
        ┌───────────────────────────────┐  │
  S2 ───│  DETERMINE IMAGE PARAMETERS   │  │
        └───────────────────────────────┘  │
                       │                    │
                       ▼                    │
        ┌───────────────────────────────┐  │
  S3 ───│     DATA FORMAT CONVERSION     │  │
        └───────────────────────────────┘  │
                       │                    │
                       ▼                    │
        ┌───────────────────────────────┐  │
  S4 ───│           TRANSMIT             │  │
        └───────────────────────────────┘  │
                       │                    │
                       ▼                    │
                  ┌─────────┐               │
                  │   END   │               │
                  └─────────┘               │
```

# FIG.21